# EUROPEAN PATENT SPECIFICATION

(11) **EP 3 439 233 B1**
(45) Date of publication and mention of the grant of the patent: **30.12.2020**
(21) Application number: 18164629.0
(22) Date of filing: 28.03.2018
(51) Int. Cl.: H04L 9/32, H04L 9/08

(54) **DISTRIBUTING A COMPUTATION OUTPUT**
VERTEILUNG EINER BERECHNUNGSAUSGABE
DISTRIBUTION D'UN RÉSULTAT DE CALCUL

(30) Priority: 31.07.2017 US 201762539062 P; 19.02.2018 US 201862631975 P
(43) Date of publication of application: 06.02.2019
(73) Proprietor: Koninklijke Philips N.V., 5656 AG Eindhoven (NL)
(72) Inventor: VEENINGEN, Meilof Geert, 5656 AE Eindhoven (NL); DE HOOGH, Sebastiaan Jacobus Antonius, 5656 AE Eindhoven (NL)
(74) Representative: Steenbeek, Leonardus Johannes

(56) References cited:
- DAMGÅRD IVAN ET AL: "Practical Covertly Secure MPC for Dishonest Majority - Or: Breaking the SPDZ Limits", 9 September 2013 (2013-09-09), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047038307, ISSN: 0302-9743 ISBN: 978-3-540-70543-7 * figure 3 *
- BAUM CARSTEN ET AL: "Efficient Secure Multiparty Computation with Identifiable Abort", 22 October 2016 (2016-10-22), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047360292, ISSN: 0302-9743 ISBN: 978-3-540-70543-7 [retrieved on 2016-10-22] * section 1 *
- ASHAROV GILAD ET AL: "Complete Characterization of Fairness in Secure Two-Party Computation of Boolean Functions", 23 March 2015 (2015-03-23), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 199 - 228, XP047505188, ISBN: 978-3-319-10403-4

## Description

### FIELD OF THE INVENTION

This disclosure relates to the distribution of a computation output, and in particular to the distribution of a computation output computed by two parties using multiparty computation techniques to each other and another node.

### BACKGROUND OF THE INVENTION

SPDZ is a family of multiparty computation (MPC) protocols along the lines of a "preprocessing model", where the computation assumes the availability of certain preprocessing information (that can be used only once). If this preprocessing data is correct, then in the 2-party variant, each party is assured that the computation is performed correctly even if the other party is corrupted, i.e. it is known as "1-out-of-2 secure". The preprocessing information most significantly includes multiplication triples: additive shares of values *a*; *b*; *c* such that *c* = *a* · *b* (modulo a prime, as described in "Practical covertly secure MPC for dishonest majority - or: Breaking the SPDZ limits" by I. Damgard, M. Keller, E. Larraia, V. Pastro, P. Scholl, and N. P. Smart, in Computer Security - ESORICS 2013 - 18th European Symposium on Research in Computer Security, Egham, UK, September 9-13, 2013, Proceedings, pages 1-18, 2013).

It is thought that the SPDZ protocol for 1-out-of-2 MPC (i.e. secure if one out of two parties is corrupted) in the preprocessing model can be converted into a protocol for 1-out-of-3 MPC (i.e. secure if one of three parties is corrupted) in the plain model without preprocessing. For this, one party (referred to as a "dealer") carries out the preprocessing and provides the results to the other two parties (referred to as the "evaluators"), who then carry out the two-party computation (2PC) protocol among themselves. This requires a method by which the evaluators can verify that the received preprocessing information is correct, and it requires a method by which the dealer, who is not a party in the 1-out-of-2 MPC, provides inputs to and obtains outputs of the computation.

For the former, i.e. verifying correctness of the preprocessing information, one straightforward way is to use so-called "cut-and-choose" techniques: for instance, the dealer generates sets of preprocessing information 40 times; the evaluators pick 39 of these sets at random, exchange their respective parts of the preprocessing information, and check whether it was correctly generated; and if so, they use the 40^{th} set of preprocessing information in the remainder of the protocol. A more complicated way of verifying correctness with stronger security guarantees would be to apply the triple verification techniques from "Multiparty Computation for Dishonest Majority: From Passive to Active Security at Low Cost" by I. Damgård and C. Orlandi, LNCS, volume 6223, Springer, 2010 in the present setting with a trusted dealer.

A straightforward way of doing the latter, i.e., letting the dealer provide inputs to and obtain outputs from the computation, was suggested (in a slightly different setting) in "A framework for outsourcing of secure computation" by T. P. Jakobsen, J. B. Nielsen, and C. Orlandi in IACR Cryptology ePrint Archive, 2016:37, 2016, in which the dealer provides inputs by providing secret shares of the inputs, a MAC (Message Authentication Code) key, and a MAC on the inputs using this MAC key, and the evaluators verify authenticity by re-computing the MAC; and the dealer obtains outputs by letting the evaluators together determine the computation output and both send the output of the computation to the dealer, who accepts the computation result if, and only if, the two values match.

More generally, any two-party computation protocol, i.e., any MPC protocol for two parties (including protocols that do not employ preprocessing), can be turned into a three-party computation protocol by letting a third party (that, if there is no preprocessing, does not have to act as a dealer) provide inputs to and obtain outputs from the computation using the above approach.

However, the above technique for distributing the computation output between the three parties does not satisfy the desirable property of 'fairness'. Fairness means that either all parties get the computation result, or none of them do (assuming that at most one of the three parties is actively corrupted). In the above technique, one of the evaluators can simply send a wrong computation result to the dealer, and the dealer has no way of telling which of the two evaluators sent the correct computation result. A further problem is that a first evaluator can wait until the second evaluator sends the information that the first evaluator needs to determine the output and terminate before either the second evaluator or the dealer learns the computation result.

### SUMMARY OF THE INVENTION

There is therefore a need for improvements in the distribution of a computation output that does guarantee fairness. The invention is defined by the independent claims; the dependent claims define advantageous embodiments. The reader is given notice that subject matter described but not claimed herein may be claimed in a parallel application.

According to a first aspect, there is provided a computer-implemented method of operating a first evaluator node to distribute a computation output, the method comprising: receiving a first secret value secret share of a secret value from a dealer node; determining, with a second evaluator node, a random mask; performing a computation with the second evaluator node to determine: (i) a first masked computation output secret share of a masked computation output, wherein the masked computation output is a function of an output of the computation and the random mask; and (ii) a first Message Authentication Code, MAC, secret share of a MAC of the masked computation output, wherein the MAC of the masked computation output is a function of the masked computation output and the secret value; sending the first masked computation output secret share and the first MAC secret share to the dealer node; receiving a first masked computation output from the dealer node; receiving a second computation output secret share from the second evaluator node, wherein the second computation output secret share is a secret share, determined by the second evaluator node, of the output of the computation; determining a first possible computation output from a first computation output secret share and the received second computation output secret share, wherein the first computation output secret share is a secret share, determined by the first evaluator node when performing the computation, of the output of the computation; determining a second possible computation output from the received first masked computation output and the random mask; determining the output of the computation from the first possible computation output and the second possible computation output; sending information to the dealer node to enable the dealer node to determine the output of the computation from the first masked computation output.

According to a second aspect, there is provided a computer-implemented method of operating a dealer node to distribute a computation output, the method comprising: receiving, from a first evaluator node, a first masked computation output secret share of a masked computation output and a first Message Authentication Code, MAC, secret share of a MAC of the masked computation output, wherein the masked computation output is a function of an output of the computation and a random mask, and wherein the MAC of the masked computation output is a function of the masked computation output and a secret value; receiving, from the second evaluator node, a second masked computation output secret share of the masked computation output and a second MAC secret share of the MAC of the masked computation output; verifying the MAC of the masked computation output using the first masked computation output secret share, the first MAC secret share, the second masked computation output secret share, the second MAC secret share, and the secret value, wherein verifying the MAC of the masked computation output comprises combining the first masked computation output secret share and the second masked computation output secret share to determine the first masked computation output; if the MAC of the masked computation output is verified, sending the determined first masked computation output to the first evaluator node and the second evaluator node; receiving information from one or both of the first evaluator node and the second evaluator node; and determining the output of the computation from the first masked computation output and the received information.

According to a third aspect, there is provided a first evaluator node for use in distributing a computation output, wherein the first evaluator node is configured to: receive a first secret value secret share of a secret value from a dealer node; determine, with a second evaluator node, a random mask; perform a computation with the second evaluator node to determine: (i) a first masked computation output secret share of a masked computation output, wherein the masked computation output is a function of an output of the computation and the random mask; and (ii) a first Message Authentication Code, MAC, secret share of a MAC of the masked computation output, wherein the MAC of the masked computation output is a function of the masked computation output and the secret value; send the first masked computation output secret share and the first MAC secret share to the dealer node; receive a first masked computation output from the dealer node; receive a second computation output secret share from the second evaluator node, wherein the second computation output secret share is a secret share, determined by the second evaluator node, of the output of the computation; determine a first possible computation output from a first computation output secret share and the received second computation output secret share, wherein the first computation output secret share is a secret share, determined by the first evaluator node when performing the computation, of the output of the computation; determine a second possible computation output from the received first masked computation output and the random mask; determine the output of the computation from the first possible computation output and the second possible computation output; and send information to the dealer node to enable the dealer node to determine the output of the computation from the first masked computation output.

According to a fourth aspect, there is provided a dealer node for distributing a computation output, wherein the dealer node is configured to: receive, from a first evaluator node, a first masked computation output secret share of a masked computation output and a first Message Authentication Code, MAC, secret share of a MAC of the masked computation output, wherein the masked computation output is a function of an output of the computation and a random mask, and wherein the MAC of the masked computation output is a function of the masked computation output and a secret value; receive, from a second evaluator node, a second masked computation output secret share of the masked computation output and a second MAC secret share of the MAC of the masked computation output; verify the MAC of the masked computation output using the first masked computation output secret share, the first MAC secret share, the second masked computation output secret share, the second MAC secret share, and the secret value, wherein verifying the MAC of the masked computation output comprises combining the first masked computation output secret share and the second masked computation output secret share to determine the first masked computation output; if the MAC of the masked computation output is verified, send the determined first masked computation output to the first evaluator node and the second evaluator node; receive information from one or both of the first evaluator node and the second evaluator node; and determine the output of the computation from the first masked computation output and the received information.

According to a fifth aspect, there is provided a computer program product comprising a computer readable medium having computer readable code embodied therein, the computer readable code being configured such that, on execution by a suitable computer or processor, the computer or processor is caused to perform any of the method aspects described above.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a block diagram of an exemplary system according to various embodiments;
Fig. 2 is a flow chart illustrating an exemplary method of operating an evaluator node; and
Fig. 3 is a flow chart illustrating an exemplary method of operating a dealer node.

### DETAILED DESCRIPTION OF EMBODIMENTS

As noted above, protocols for 1-out-of-3 multiparty computation (MPC) are considered (i.e. which are secure if one of three parties is corrupted) in which two parties (referred to herein as the "evaluators" or "evaluator nodes") carry out a two-party computation (2PC) among each other, possibly after the third party (referred to as a "dealer" or "first computing node" herein) has carried out preprocessing of data and provides the results to the evaluators, who have then verified that the received preprocessing information is correct. In such a system, the dealer/first node needs to obtain the output of the computation. The distribution of computation output between the three parties should satisfy the property of 'fairness', meaning that either all parties get the computation result, or none of them do (assuming that at most one of the three parties is actively corrupted). The techniques described herein relate to the distribution of the computation output in a way that satisfies the fairness property.

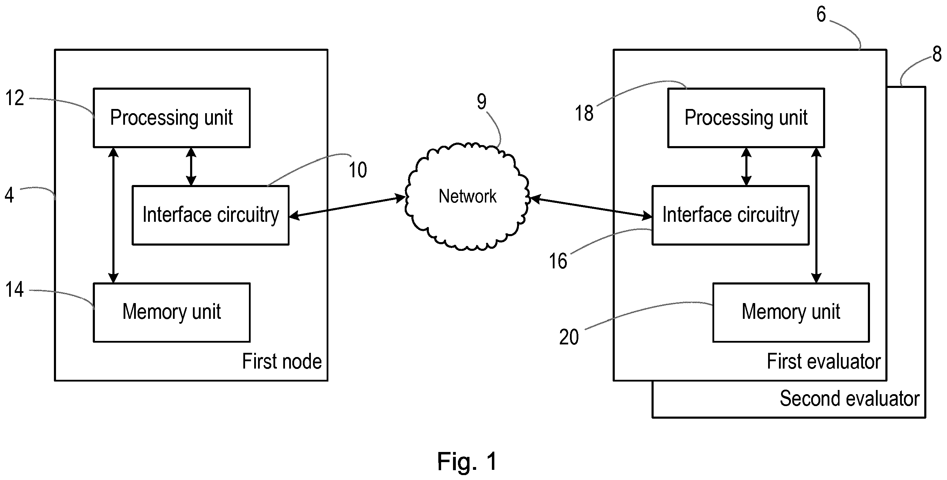

Fig. 1 is a block diagram of a system 2 in which the techniques and principles described herein may be implemented. The system 2 comprises a first node 4 (which in some embodiments is also referred to herein as a "first computing node", "dealer" or "dealer node"), and two evaluator nodes (specifically a first evaluator node 6 and a second evaluator node 8), which are also referred to as "first evaluator" and "second evaluator".

The first node 4 and evaluators 6, 8 are interconnected via a network 9, such as the Internet, and thus may be located at respectively different locations. Of course, it will be appreciated that one or more of the evaluators 6, 8 may be local to the first node 4, or local to each other, and interconnected via a wired or wireless connection.

The first node 4, first evaluator 6 and second evaluator 8 can be any type of electronic device or computing device that can connect to network 9. For example, each of the first node 4, first evaluator 6 and second evaluator 8 can be any of a computer (e.g. a server or desktop computer), a laptop, a tablet computer, a smart phone, etc.

The first node 4 includes interface circuitry 10 for enabling a data connection to other devices, such as the evaluators 6, 8. In particular the interface circuitry 10 can enable a connection between the first node 4 and the network 9, such as the Internet, via any desirable wired or wireless communication protocol. The first node 4 further includes a processing unit 12 for performing operations on data and for generally controlling the operation of the first node 4. The first node 4 further includes a memory unit 14 for storing any data required for the execution of the techniques described herein and for storing computer program code for causing the processing unit 12 to perform method steps as described in more detail below.

The processing unit 12 can be implemented in numerous ways, with software and/or hardware, to perform the various functions described herein. The processing unit 12 may comprise one or more microprocessors or digital signal processor (DSPs) that may be programmed using software or computer program code to perform the required functions and/or to control components of the processing unit 12 to effect the required functions. The processing unit 12 may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

The memory unit 14 can comprise any type of non-transitory machine-readable medium, such as cache or system memory including volatile and non-volatile computer memory such as random access memory (RAM) static RAM (SRAM), dynamic RAM (DRAM), read-only memory (ROM), programmable ROM (PROM), erasable PROM (EPROM), and electrically erasable PROM (EEPROM).

Fig. 1 shows the exemplary components of the first evaluator 6, and it will be appreciated that the second evaluator 8 comprises similar components. Thus, the evaluator 6, 8 includes interface circuitry 16 for enabling a data connection to other devices, such as the first node 4 and the other evaluator 6, 8. In particular the interface circuitry 16 can enable a connection between the evaluator 6, 8 and the network 9, such as the Internet, via any desirable wired or wireless communication protocol. The evaluator 6, 8 further includes a processing unit 18 for performing operations on data and for generally controlling the operation of the evaluator 6, 8. The evaluator 6, 8 further includes a memory unit 20 for storing any data required for the execution of the techniques described herein and for storing computer program code for causing the processing unit 18 to perform method steps as described in more detail below.

The processing unit 18 and memory unit 20 can be implemented in numerous ways, similar to the processing unit 12 and memory unit 14 in the first node 4.

In the techniques described herein, it is assumed that after performing a multiparty computation the two evaluators 6, 8 have respective additive secret shares of the computation result *z.* The first evaluator 6 has a secret share denoted [*z*]₁, and the second evaluator 8 has a secret share denoted [*z*]₂. As used herein, [·]₁ represents a secret share held by the first evaluator 6 of an element, and [·]₂ represents a secret share held by the second evaluator 8 of an element.

Typically, the evaluators 6, 8 would exchange their shares of the output *z* and use a method prescribed by the 2PC protocol to verify the correctness of this output. For instance, in SPDZ-style protocols, at the end of the computation the two evaluators 6, 8 hold respective additive secret shares [*α*]₁, [*α*]₂ of a secret key (which can be a Message Authentication Code or "MAC" key, and for example an information-theoretic MAC) chosen by the dealer/first node 4; and [*αz*]₁, [*αz*]₂ of *z* respectively (which is an "information-theoretic MAC" on *z* using *α* as key). In this case, the evaluators 6, 8 would exchange their shares of *z* and run a MAC check procedure (for example as described in "Practical covertly secure MPC for dishonest majority - or: Breaking the SPDZ limits") to verify that the value *z* was correct.

However, embodiments of the techniques described herein blind the output *z* with a random mask *s,* and a correctness check on *z* + *s* is performed by a party that does not know *s.* If the check is successful, then *s* is revealed.

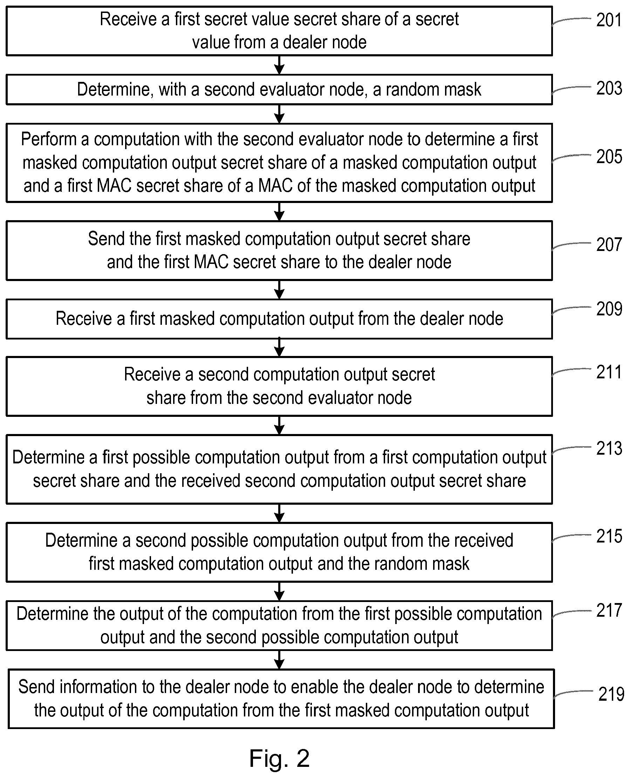

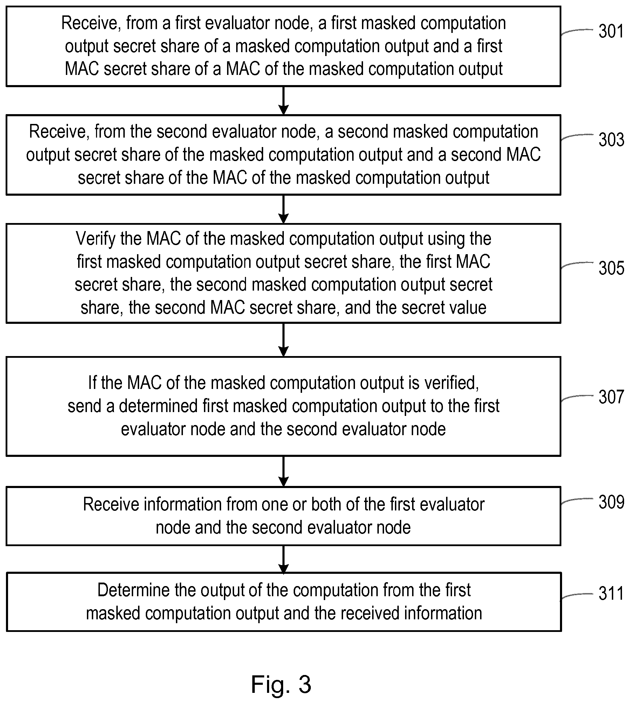

In the embodiments described below with reference to Figs. 2 and 3, the evaluators 6, 8 set *s* and the first node/dealer 4 checks correctness.

Firstly, a general description of the operations is provided. Here, the dealer has distributed preprocessing information for an execution of the SPDZ protocol between the two evaluators, as described above. In particular, as a result of this preprocessing, the dealer knows the SPDZ MAC key *α* of which the two evaluators each have respective additive secret shares [*α*]*ᵢ*. In these techniques, the evaluators 6, 8 agree on a random mask *s* (for example one evaluator determines *s* and sends it to the other evaluator 6, 8) and each sends a respective secret share [*z* + *s*]ᵢ and [*α* · (*z* + *s*)]ᵢ of the masked output *z* + *s* and its MAC (*α* · (*z* + *s*)) to the dealer 4. It should be noted that, to eliminate the possibility that a particular way in which the values *z*+*s* and *α·*(*z* + *s*) are secret shared between the evaluators 6, 8 leaks information to the dealer 4, the evaluators 6, 8 may re-randomize their shares prior to sending them to the dealer 4, for instance by the first evaluator 6 adding a random value to its secret share and the second evaluator 8 removing (subtracting) the same random value from its secret share.

The dealer 4 verifies the MAC on *z* + *s* based on its knowledge of *α*. If the MAC is not correct, the protocol terminates without giving any output.

The dealer 4 determines *z* + *s* from the received secret shares and sends *z* + *s* to the evaluators 6, 8 in such a way that all three parties agree on which value was sent; for instance, using a protocol for broadcast such as the Dolev-Strong protocol ("Authenticated Algorithms for Byzantine Agreement" by D. Dolev and H. R. Strong, SIAM J. Comput., 12(4), 656-666).

The evaluators 6, 8 determine *z* from *z* + *s*, and the evaluators 6, 8 send *s* to the dealer 4.

The evaluators 6, 8 exchange their respective shares [*z*]ᵢ and determine *z*, and they each check if this *z* matches the value *z'* := (*z* + *s*) - *s*, based on the *z* + *s* received from the dealer 4. If this *z* does match *z*', the evaluators 6, 8 accept *z* = *z*' as the computation result. If this *z* does not match *z',* then the evaluators 6, 8 perform a MAC check on *z.* If the MAC check is successful then the evaluators 6, 8 accept *z* as the computation result, and if the MAC check is unsuccessful, the evaluators 6, 8 accept *z'* as the computation result.

In the above method, it is not specified how the evaluators 6, 8 can 'provide *s'* to the dealer 4 after determining *z* from *z* + *s.* If the evaluators 6, 8 both just send *s* to the dealer 4, the dealer 4 would not know which one was correct. Two possibilities for addressing this problem are set out below.

In a first possibility, the evaluators 6, 8 both commit to *s* using the same commitment function and, if this is a randomized function, using the same randomness; provide the commitments to *s* to the dealer 4; and the dealer 4 terminates the computation output distribution procedure without providing *z* + *s* if the two commitments do not match. Otherwise, the dealer 4 accepts whichever received value *of s* matches the received commitment, in the sense that re-computing it gives the same value that was received before. If the commitment is a randomized function, the evaluators both provide to the dealer along with *s* the randomness used to determine the commitment.

In a second possibility, the dealer 4 provides secret values *β*, *γ* as inputs of the multi-party computation to the evaluators 6, 8. The evaluators 6, 8 compute *βs* + *γ* as part of the computation and both evaluators 6, 8 send s and *βs* + *γ* to the dealer 4. The dealer 4 accepts the correctly formed *s.*

A detailed embodiment of these techniques is now provided in notation form, which uses a commitment-based technique to provide *s.* In the following, Comm(*m; r*) is any commitment to message *m* with randomness *r,* e.g., a Pedersen commitment or a cryptographic hash applied to the concatenation of the message and randomness. In the following notation, the first evaluator 6 and the second evaluator 8 are denoted 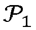 and 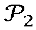 respectively, and the dealer node 4 is denoted 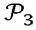 . The notation 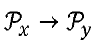 refers to the sending of some information from node 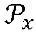 to node 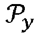 , and the notation 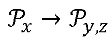 refers to the sending of some information from node 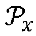 to node 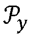 and node 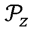 . The notation 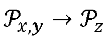 refers to the sending of the same information to node 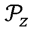 from both node 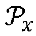 and node 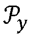 *.* r₁ and r₂ are the random values used to re-randomize the secret shares of *z*+*s* and *α·*(*z* + *s*) respectively.
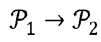 : *s, r*₁, *r*₂, *r*₃ (chosen randomly)
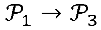 : [*z*]₁ + *s* + *r*₁, [*αz*]₁ + [*α*]₁ · *s* + *r*₂, Comm(*s*;*r*₃)
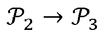 : [*z*]₂ - *r*₁, [*αz*]₂ + [*α*]₂ · *s* - *r*₂, Comm(*s*; *r*₃)
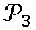 : if MAC wrong or commitments differ: send "fail" and terminate 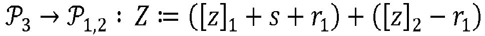 (such that all parties agree on the value sent)
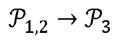 : *s*,*r*₃
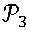 : accepts *Z* - s for *s, r*₃ matching the commitment
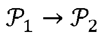 : [*z*]₁
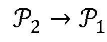 : [*z*]₂
: next rounds 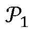 , 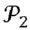 : if *Z* - *s* = [*z*]₁ + [*z*]₂, accept result
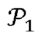 , 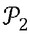 : if *Z - s*
≠ [*z*]₁ + [*z*]₂: if the MAC check on [*z*]₁ + [*z*]₂ succeeds: accept [*z*]₁
+ [*z*]₂, else accept *Z* - *s*

The techniques are now described with reference to the flow charts in Figs. 2 and 3. Fig. 2 is a flow chart illustrating a method of operating an evaluator node 6, 8 to distribute a computation output, and Fig. 3 is a flow chart illustrating a corresponding method of operating a dealer node 4 to distribute the computation output. Although the method in Fig. 2 is described from the point of view of the first evaluator node 6, it will be appreciated that both of the first evaluator node 6 and the second evaluator node 8 operate according to the method shown in Fig. 2. It will also be appreciated that the order of the steps presented in Figs. 2 and 3 is merely exemplary and it may be possible for the order of one or more of the illustrated steps to be changed or altered from that shown.

The method steps in the flow chart of Fig. 2 can be performed by the processing unit 18 and interface circuitry 16 in the evaluator node 6, 8. In some embodiments, computer program code can be provided that causes the processing unit 18 and/or interface circuitry 16 to operate according to the method shown in Fig. 2. Likewise, the method steps in the flow chart of Fig. 3 can be performed by the processing unit 12 and interface circuitry 10 in the dealer node 4. In some embodiments, computer program code can be provided that causes the processing unit 12 and/or interface circuitry 10 to operate according to the method shown in Fig. 3.

In the first step of Fig. 2, step 201, the first evaluator node 6 receives a first secret value secret share of a secret value from the dealer node 4. This can be received via the interface circuitry 16. The secret value may be a MAC key, *α*, and thus the first evaluator node 6 can receive a secret share of the MAC key, [*α*]₁. The second evaluator node 8 will receive a respective secret share of the secret value ([*α*]₁). The MAC key can be a "one-time MAC" which is a variant of a MAC that can only be used once, or it can be a regular MAC key. Alternatively, the secret value may be a digital signature key, and thus the first evaluator node 6 can receive a secret share of the digital signature key.

Although not shown in Fig. 3, the method of operating the dealer node 4 can include providing respective secret value secret shares of a secret value to each of the first evaluator node 6 and the second evaluator node 8.

In the next step of Fig. 2, step 203, the first evaluator node 6 determines a random mask s with the second evaluator node 8. This step can comprise the first evaluator node 6 generating the random mask s and sending it to the second evaluator node 8 so that both evaluator nodes 6, 8 know the random mask *s,* or this step can comprise the first evaluator node 6 receiving the random mask *s* from the second evaluator node 8 (after the second evaluator node 8 has generated the random mask *s*).

In step 205 of Fig. 2, the first evaluator node 6 performs a computation with the second evaluator node 8. This computation is a multiparty computation (MPC). Performing the computation results in the first evaluator node 6 determining a secret share of the computation output, a secret share of a masked computation output and a secret share of a MAC of the masked computation output.

As the computation is an MPC, each of the first evaluator node 6 and the second evaluator node 8 therefore have a respective secret share of the computation output, and neither the first evaluator node 6 or the second evaluator node 8 individually know the actual computation output. The secret share of the computation output determined by the first evaluator node 6 is referred to herein as the "first computation output secret share" and the secret share of the computation output determined by the second evaluator node 8 is referred to herein as the "second computation output secret share".

As noted above, performing the computation determines the computation output masked using the random mask, and thus the masked computation output is a function of an output of the computation and the random mask. In some embodiments, the masked computation output is a sum of the computation output and the random mask. As the computation is an MPC, each of the first evaluator node 6 and the second evaluator node 8 therefore have a respective secret share of the masked computation output, and neither the first evaluator node 6 nor the second evaluator node 8 individually know the masked computation output. The secret share of the masked computation output determined by the first evaluator node 6 is referred to herein as the "first masked computation output secret share" and the secret share of the masked computation output determined by the second evaluator node 8 is referred to herein as the "second masked computation output secret share".

As noted above, performing the computation also determines a MAC of the masked computation output. Thus, the computation provides a MAC, determined as a function of the secret value received in step 201 and the masked computation output, and each of the first evaluator node 6 and the second evaluator node 8 has a respective secret share of the MAC. Thus, neither the first evaluator node 6 nor the second evaluator node 8 individually know the MAC. In some embodiments, the MAC of the masked computation output is a product of the masked computation output and the secret value. The secret share of the MAC of the masked computation output determined by the first evaluator node 6 is referred to herein as the "first MAC secret share" and the secret share of the MAC of the masked computation output determined by the second evaluator node 8 is referred to herein as the "second MAC secret share".

Next, in step 207, the first evaluator node 6 sends the first masked computation output secret share and the first MAC secret share to the dealer node 4.

Step 301 in Fig. 3 shows the dealer node 4 receiving the first masked computation output secret share and the first MAC secret share from the first evaluator node 6.

The second evaluator node 8 likewise sends the second masked computation output secret share and the second MAC secret share to the dealer node 4, and step 303 in Fig. 3 shows the dealer node 4 receiving the second masked computation output secret share and the second MAC secret share from the second evaluator node 8.

Next, in step 305 of Fig. 3, the dealer node 4 verifies the MAC of the masked computation output using the information received in steps 301 and 303. That is, the dealer node 4 reconstructs the MAC of the masked computation output from the first MAC secret share and the second MAC secret share, and verifies that the reconstructed MAC is correct using the secret value that was provided (as respective secret shares) to the first evaluator node 6 and second evaluator node 8, the first masked computation output secret share and the second masked computation output secret share. In verifying the MAC of the masked computation output, the dealer node 4 combines the first masked computation output secret share and the second masked computation output secret share to determine a masked computation output. This masked computation output, i.e. that formed in step 305 by the dealer node 4 from the received first masked computation output secret share and the received second masked computation output secret share, is referred to as the "first masked computation output" herein.

In some embodiments, if the MAC is not verified then the method can be terminated after step 305.

Otherwise, if in step 305 the MAC of the masked computation output is verified, then in step 307 the dealer node 4 sends the first masked computation output to the first evaluator node 6 and the second evaluator node 8. The first masked computation output is preferably broadcast from the dealer node 4 so that the first evaluator node 6 and the second evaluator node 8 know that each has received the same first masked computation output. This broadcast can be over a broadcast channel or using the Dolev-Strong protocol for performing broadcast between pairwise connected nodes.

Step 209 of Fig. 2 shows the first evaluator node 6 receiving the first masked computation output from the dealer node 4. In some embodiments, if the first evaluator node 6 detects that the dealer node 4 has sent a different value of the first masked computation output to the second evaluator node 8, then the first evaluator node 6 can terminate the method and not perform any subsequent steps.

In step 211, the first evaluator node 6 receives a second computation output secret share from the second evaluator node 8. Although not shown in Fig. 2, in some embodiments, the first evaluator node 6 can send the first computation output secret share to the second evaluator node 8.

In step 213 the first evaluator node 6 determines a first possible computation output from the first computation output secret share and the received second computation output secret share. That is, the first evaluator node 6 combines the first computation output secret share and the second computation output secret share to determine a computation output. As it is not known at this stage whether this computation output is correct, this computation output is referred to as a "first possible computation output".

In step 215, the first evaluator node 6 determines a second possible computation output from the first masked computation output received in step 209 and the random mask determined in step 203. That is, the random mask can be used to 'remove' the random mask from the first masked computation output to reveal the computation output. As it is not known at this stage whether this computation output is correct, this computation output is referred to as a "second possible computation output".

In step 217, the first evaluator node 6 determines the output of the computation from the first possible computation output and the second possible computation output.

In some embodiments, in step 217 the output of the computation from the first possible computation output and the second possible computation output is determined by comparing the first possible computation output to the second possible computation output and determining the computation the output of the computation based on the comparison.

If the first evaluator node 6 and second evaluator node 8 have performed the computation correctly, and the dealer node 4, first evaluator node 6 and the second evaluator node 8 have honestly communicated the various pieces of information mentioned above, then the first possible computation output should be the same as the second possible computation output, and thus either output can be used as the computation output if the first possible computation output matches the second possible computation output.

However, if the first possible computation output does not match the second possible computation output, then step 217 can further comprise performing a MAC check on the first possible computation output, and the output of the computation can be determined as the first possible computation output if the MAC check is passed, and the output of the computation can be determined as the second possible computation output if the MAC check is failed.

The MAC check on the first possible computation output can be the SPDZ MAC check, e.g., as described in the paper: "Practical Covertly Secure MPC for Dishonest Majority - or: Breaking the SPDZ Limits". More generally, at this stage of the method, the first evaluator node 6 knows the first computation output secret share ([*z*]₁), the second computation output secret share ([*z*]₂), the first masked computation output secret share ([*αz*]₁) and the first secret value secret share [*α*]₁, and the second evaluator node 8 likewise knows the first computation output secret share ([*z*]₁), the second computation output secret share ([*z*]₂), the second masked computation output secret share ([*αz*]₂) and the second secret value secret share [*α*]₂, and together the first evaluator node 6 and the second evaluator node 8 determine (using some distributed protocol) whether the following is true: $\left({\left[z\right]}_{1}+{\left[z\right]}_{2}\right) ∗ \left({\left[α\right]}_{1}+{\left[α\right]}_{2}\right) = \left({\left[αz\right]}_{1}+{\left[αz\right]}_{2}\right)$

Finally, in step 219, the first evaluator node 6 sends information to the dealer node 4 to enable the dealer node 4 to determine the output of the computation from the first masked computation output. In some embodiments, this information is the random mask *s,* which was determined in step 203. In other embodiments, the first evaluator node 6 can send the first possible computation output determined in step 213 to the dealer node 4.

In some further embodiments, where the information sent in step 219 is the random mask, the method in the first evaluator node 6 can further include determining a commitment to the random mask, and sending the commitment to the dealer node 4. In some embodiments, the commitment is a cryptographic hash of the random mask, and in other embodiments the commitment is a function of the random mask and a random number (e.g. *r*₃ in the above notation-based description of the first variant). This commitment to the random mask can be sent to the dealer node 4 at an early stage of the method (e.g. along with the other information sent in step 207).

In some further embodiments, as part of the computation, the first evaluator node 6 and second evaluator node 8 determine the result of a function of one or more parameters and the random mask *s,* for example a first parameter *β* and a second parameter *γ*, and send the result of the function of the one or more parameters and the random mask to the dealer node 4. The one or more parameters are provided as private inputs to the computation by the dealer node 4. The function of the one or more parameters and the random mask *s* is generally a MAC, for example an unconditionally secure MAC, e.g. m = *β*x + *γ*, where x is the input string.

Returning to Fig. 3, the dealer node 4 receives information from one or both of the first evaluator node 6 and the second evaluator node 8 in step 309 (this is the information that was sent in step 219 of Fig. 2), and uses this information in step 311 to determine the output of the computation from the first masked computation output derived in step 307 and the received information. As noted above, the received information may be the random mask, and thus step 311 can comprise using the received random mask to 'remove' the random mask from the first masked computation output to reveal the computation output.

In some embodiments, as noted above, the dealer node 4 can also receive a commitment to the random mask from the first evaluator node 6 (referred to as the "first commitment", and a commitment to the random mask from the second evaluator node 8 (referred to as the "second commitment"). The dealer node 4 then compares the first commitment and the second commitment. If the commitments do not match, then the dealer node 4 can terminate the method, and otherwise, i.e. if the commitments do match, the dealer node 4 can proceed with the method described above. Furthermore, where the information received in step 311 is the random mask, and the random mask is received from each of the first evaluator node 6 and the second evaluator node 8, the dealer node 4 can determine which of the received random masks match the respective received commitment, and the dealer node 4 can use a received random mask that matches the respective received commitment in performing step 311.

In some embodiments, as noted above, the dealer node 4 can provide one or more parameters, e.g. a first parameter *β* and a second parameter *γ*, as private inputs to the computation performed by the first evaluator node 6 and the second evaluator node 8, and receive a result of a function of the first parameter, the second parameter and the information received from the first evaluator node 6 and the second evaluator node 8. The dealer node 4 can then determine from the received results which received information is correct, and use the correct received information in step 311 to determine the computation output.

The techniques described herein can be applied in any setting that requires arithmetic-circuit multiparty computation between three parties or multiparty computation in the outsourcing setting (e.g. where many inputters/outputters outsource the work to a small number of evaluators). Whenever, at the end of a three-party computation, a result shared between two parties needs to be fairly distributed between all three parties, it is highly desirable to apply a technique as described herein to achieve fairness.

There is therefore provided techniques that improve the distribution of a computation output between three parties that guarantee fairness.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems.

## Claims

1. A computer-implemented method of operating a dealer node to distribute a computation output, the method comprising:
providing a respective secret value secret share of a secret value to each of a first evaluator node and a second evaluator node;
receiving, from the first evaluator node, a first masked computation output secret share of a masked computation output and a first Message Authentication Code, MAC, secret share of a MAC of the masked computation output, wherein the masked computation output is a function of an output of the computation and a random mask, and wherein the MAC of the masked computation output is a function of the masked computation output and the secret value, the first MAC secret share being formed using the secret value secret share of the first evaluator node; wherein the random mask is determined by the first and the second evaluator nodes;
receiving, from the second evaluator node, a second masked computation output secret share of the masked computation output and a second MAC secret share of the MAC of the masked computation output, the second MAC secret share being formed using the secret value secret share of the second evaluator node;
verifying the MAC of the masked computation output using the first masked computation output secret share, the first MAC secret share, the second masked computation output secret share, the second MAC secret share, and the secret value, wherein verifying the MAC of the masked computation output comprises combining the first masked computation output secret share and the second masked computation output secret share to determine the first masked computation output;
if the MAC of the masked computation output is verified:
sending the determined first masked computation output to the first evaluator node and the second evaluator node;
receiving, from both the first and the second evaluator node, information to enable the dealer node to determine the output of the computation from the first masked computation output;
determining which of the received information is correct, and using correct received information to determine the computation output.

2. A method as defined in claim 1, wherein:
the method further comprises, before sending the determined first masked computation output, receiving a first commitment to the random mask from the first evaluator node and a second commitment to the random mask from the second evaluator node and verifying that the first and second commitments match;
the received information comprises the random mask, the random mask being received from each of the first evaluator node and the second evaluator node; and
determining which of the received information is correct, comprises determining which of the received random masks match the respective received commitment using the received random masks.

3. A method as defined in claim 1, wherein the method further comprises:
providing one or more parameters of a MAC function as private inputs to the multi-party computation performed by the first evaluator node and the second evaluator node;
receiving, from each of the first evaluator node and the second evaluator node, a result of the MAC function applied to the one or more parameters and the received information, determined as part of the multi-party computation;
and wherein determining which of the received information is correct, is based on the received information and the received results of the MAC function.

4. A method as defined in any of claims 1-3, wherein the received information comprises the random mask or a first possible computation output.

5. A method as defined in any of claims 1-4, wherein the step of sending comprises broadcasting the first masked computation output to the first evaluator node and the second evaluator node.

6. A computer program product comprising a computer readable medium having computer readable code embodied therein, the computer readable code being configured such that, on execution by a suitable computer or processor, the computer or processor is caused to perform the method of any of claims 1-5.

7. A dealer node for distributing a computation output, wherein the dealer node is configured to perform the method of any of claims 1-5.

## Patentansprüche

1. Computerimplementiertes Verfahren zum Betreiben eines Dealer-Knotens, um das Ergebnis einer Berechnung zu verteilen, wobei das Verfahren umfasst:
Bereitstellen eines jeweiligen geheimen Geheimniswert-Share an jedem von einem ersten Auswertungsknoten und einem zweiten Auswertungsknoten;
Empfangen eines ersten geheimen Masked-Computation-Output-Share eines maskierten Ergebnisses der Berechnung und eines ersten geheimen Share eines Nachrichtenauthentifizierungscodes, MAC, eines MAC des maskierten Ergebnisses der Berechnung vom ersten Auswertungsknoten, wobei das maskierte Ergebnis der Berechnung eine Funktion eines Ergebnisses der Berechnung und einer Zufallsmaske ist, und wobei der MAC des maskierten Ergebnisses der Berechnung eine Funktion des maskierten Ergebnisses der Berechnung und des Geheimniswerts ist, wobei der erste geheime MAC-Share unter Verwendung des geheimen Geheimniswert-Share des ersten Auswertungsknotens gebildet wird, wobei die Zufallsmaske vom ersten und vom zweiten Auswertungsknoten bestimmt wird;
Empfangen eines zweiten geheimen Masked-Computation-Output-Share des maskierten Ergebnisses der Berechnung und eines zweiten geheimen MAC-Share des MAC des maskierten Ergebnisses der Berechnung von dem zweiten Auswertungsknoten, wobei der zweite geheime MAC-Share unter Verwendung des geheimen Geheimniswert-Share des zweiten Auswertungsknotens gebildet wird;
Verifizieren des MAC des maskierten Ergebnisses der Berechnung unter Verwendung des ersten geheimen Masked-Computation-Output-Share, des ersten geheimen MAC-Share, des zweiten geheimen Masked-Computation-Output-Share, des zweiten geheimen MAC-Share und des Geheimniswerts, wobei das Verifizieren des MAC des maskierten Ergebnisses der Berechnung das Kombinieren des ersten geheimen Masked-Computation-Output-Share und des zweiten, geheimen Masked-Computation-Output-Share zur Bestimmung des ersten maskierten Ergebnisses der Berechnung umfasst;
falls der MAC des maskierten Ergebnisses der Berechnung verifiziert wird:
Senden des bestimmten ersten maskierten Ergebnisses der Berechnung an den ersten Auswertungsknoten und den zweiten Auswertungsknoten;
Empfangen von Informationen, die den Dealer-Knoten in die Lage versetzen, das Ergebnis der Berechnung aus dem ersten maskierten Ergebnis der Berechnung zu bestimmen, von sowohl dem ersten als auch dem zweiten Auswertungsknoten;
Bestimmen, welche von den empfangenen Informationen korrekt ist, und Verwenden der korrekten empfangenen Informationen, um das Ergebnis der Berechnung zu bestimmen.

2. Verfahren nach Anspruch 1, wobei
das Verfahren ferner vor dem Senden des bestimmten ersten maskierten Ergebnisses der Berechnung umfasst:
Empfangen eines ersten Commitment für die Zufallsmaske von dem ersten Auswertungsknoten und eines zweiten Commitment für die Zufallsmaske von dem zweiten Auswertungsknoten und Verifizieren, dass das erste und das zweite Commitment zusammenpassen;
die empfangenen Informationen die Zufallsmaske umfassen, wobei die Zufallsmaske von sowohl dem ersten Auswertungsknoten als auch dem zweiten Auswertungsknoten empfangen wird; und
die Bestimmung, ob die empfangenen Informationen korrekt sind, umfasst: Bestimmen, welche von den empfangenen Zufallsmasken mit dem jeweiligen empfangenen Commitment zusammenpassen, unter Verwendung der Zufallsmaske.

3. Verfahren nach Anspruch 1, wobei das Verfahren ferner umfasst:
Bereitstellen eines oder mehrerer Parameter einer MAC-Funktion als private Eingaben in die Mehrparteien-Berechnung, die von dem ersten Auswertungsknoten und dem zweiten Auswertungsknoten durchgeführt wird;
Empfangen eines Ergebnisses der MAC-Funktion, die auf den einen oder die mehreren Parameter angewendet wird, und der empfangenen Informationen, die als Teil der Mehrparteien-Berechnung bestimmt werden, von sowohl dem ersten Auswertungsknoten als auch dem zweiten Auswertungsknoten;
und wobei die Bestimmung, welche von den empfangenen Informationen korrekt ist, auf den empfangenen Informationen und den empfangenen Ergebnissen der MAC-Funktion basiert.

4. Verfahren nach einem der Ansprüche 1-3, wobei die empfangenen Informationen die Zufallsmaske oder ein erstes mögliches Ergebnis der Berechnung umfassen.

5. Verfahren nach einem der Ansprüche 1-4, wobei der Schritt des Sendens das Verbreiten des ersten maskierten Ergebnisses der Berechnung an den ersten Auswertungsknoten und den zweiten Auswertungsknoten umfasst.

6. Computerprogrammprodukt, das ein computerlesbares Medium mit einem darin verkörperten computerlesbaren Code umfasst, wobei der computerlesbare Code so konfiguriert ist, dass bei seiner Ausführung durch einen geeigneten Computer oder Prozessor der Computer oder der Prozessor veranlasst wird, das Verfahren nach einem der Ansprüche 1-5 durchzuführen.

7. Dealer-Knoten zum Verteilen eines Ergebnisses einer Berechnung, wobei der Dealer-Knoten dafür ausgelegt ist, das Verfahren nach einem der Ansprüche 1-5 durchzuführen.

## Revendications

1. Procédé mis en œuvre par ordinateur de fonctionnement d'un nœud distributeur pour distribuer une sortie de calcul, ledit procédé comprenant :
la fourniture d'un partage secret de la valeur secrète respective d'une valeur secrète à un premier nœud évaluateur et à un second nœud évaluateur respectivement ;
la réception, à partir du premier nœud évaluateur, d'un premier partage secret de la sortie de calcul masqué d'une sortie de calcul masqué et d'un premier partage secret du code d'authentification de message, MAC, d'un MAC de la sortie de calcul masqué, dans lequel la sortie de calcul masqué est une fonction d'une sortie de calcul et d'un masque aléatoire, et dans lequel le MAC de la sortie de calcul masqué est une fonction de la sortie de calcul masqué et de la valeur secrète, le premier partage secret de MAC étant formé à l'aide du partage secret de la valeur secrète du premier nœud évaluateur ;
dans lequel le masque aléatoire est déterminé par les premier et second nœuds évaluateurs ;
la réception, du second nœud évaluateur, d'un second partage secret de la sortie de calcul masqué de la sortie de calcul masqué et un second partage secret MAC du MAC de la sortie de calcul masqué, le second partage secret de MAC étant formé à l'aide du partage secret de la valeur secrète du second nœud évaluateur ;
la vérification du MAC de la sortie de calcul masqué à l'aide du premier partage secret de la sortie de calcul masqué, du premier partage secret du MAC, du second partage secret de la sortie de calcul masqué, du second partage secret du MAC et de la valeur secrète, dans lequel la vérification du MAC de la sortie de calcul masqué comprend la combinaison du premier partage secret de la sortie de calcul masqué et du second partage secret de la sortie de calcul masqué pour déterminer la première sortie de calcul masqué ;
lorsque le MAC de la sortie de calcul masqué est vérifié :
l'envoi de la première sortie de calcul masqué déterminée au premier nœud évaluateur et au second nœud évaluateur ;
la réception, à la fois du premier et du second nœud évaluateur, des informations pour permettre au nœud distributeur de déterminer la sortie de calcul à partir de la première sortie de calcul masqué ;
la détermination lesquelles des informations reçues sont correctes et l'utilisation des informations reçues correctes pour déterminer la sortie de calcul.

2. Procédé selon la revendication 1, dans lequel :
le procédé comprend en outre, avant l'envoi de la première sortie de calcul masqué déterminée, la réception d'un premier engagement au masque aléatoire du premier nœud évaluateur et d'un second engagement au masque aléatoire du second nœud évaluateur et la vérification que les premier et second engagements correspondent ;
les informations reçues comprennent le masque aléatoire, le masque aléatoire étant reçu du premier nœud évaluateur et du second nœud évaluateur respectivement ; et
la détermination lesquelles des informations reçues sont correctes comprend la détermination lequel des masques aléatoires reçus correspond à l'engagement reçu respectif à l'aide des masques aléatoires reçus.

3. Procédé selon la revendication 1, dans lequel ledit procédé comprend en outre :
la fourniture d'au moins un paramètre d'une fonction MAC en tant qu'entrées privées pour le calcul multi-partie effectué par le premier nœud évaluateur et par le second nœud évaluateur ;
la réception, à partir du premier nœud évaluateur et du second nœud évaluateur respectivement, d'un résultat de la fonction MAC appliquée à l'au moins un paramètre et aux informations reçues, déterminées dans le cadre du calcul multi-partie ; et
dans lequel la détermination lesquelles des informations reçues sont correctes est basée sur les informations reçues et les résultats de la fonction MAC reçus.

4. Procédé selon l'une quelconque des revendications 1 à 3, dans lequel les informations reçues comprennent le masque aléatoire ou une première sortie de calcul possible.

5. Procédé selon l'une quelconque des revendications 1 à 4, dans lequel l'étape d'envoi comprend la diffusion de la première sortie de calcul masqué au premier nœud évaluateur et au second nœud évaluateur.

6. Produit de programme informatique comprenant un support lisible par ordinateur comportant un code lisible par ordinateur incorporé dans celui-ci, le code lisible par ordinateur étant configuré de telle sorte que, lors de l'exécution par un ordinateur ou un processeur approprié, l'ordinateur ou le processeur est amené à mettre en œuvre le procédé selon l'une quelconque des revendications 1 à 5.

7. Nœud distributeur permettant de distribuer une sortie de calcul, dans lequel ledit nœud distributeur est configuré pour mettre en œuvre le procédé selon l'une quelconque des revendications 1 à 5.
